**Europäisches Patentamt**

**European Patent Office**

**Office européen des brevets**

(19)

(11) Numéro de publication : **0 414 614 B1**

## (12) FASCICULE DE BREVET EUROPEEN

(45) Date de publication du fascicule du brevet :
04.08.93 Bulletin 93/31

(51) Int. Cl.⁵ : **G01B 11/10**

(21) Numéro de dépôt : **90402349.6**

(22) Date de dépôt : **23.08.90**

(54) **Procédé et dispositif de caractérisation géométrique de tubes transparents.**

(30) Priorité : **25.08.89 FR 8911257**

(43) Date de publication de la demande :
**27.02.91 Bulletin 91/09**

(45) Mention de la délivrance du brevet :
**04.08.93 Bulletin 93/31**

(84) Etats contractants désignés :
**DE GB**

(56) Documents cités :
**FR-A- 2 379 064**
**US-A- 3 027 457**
**US-A- 4 859 861**

(73) Titulaire : **FRANCE TELECOM**
**6, Place d'Alleray**
**F-75015 Paris (FR)**

(72) Inventeur : **Grosso, Philippe**
**Route de Trébeurden, Servel**
**F-22300 Lannion (FR)**

(74) Mandataire : **Mongrédien, André et al**
**c/o BREVATOME 25, rue de Ponthieu**
**F-75008 Paris (FR)**

EP 0 414 614 B1

## Description

La présente invention concerne un procédé et un dispositif de caractérisation géométrique de tubes transparents. Elle s'applique notamment à la caractérisation géométrique de tubes en verre, par exemple en silice, qui sont destinés à la fabrication de préformes pour fibres optiques.

On connaît déjà une technique permettant de déterminer le diamètre intérieur et le diamètre extérieur d'un tube transparent, technique selon laquelle on détermine le diamètre extérieur du tube au moyen d'un premier dispositif de mesure et l'on détermine l'épaisseur dudit tube au moyen d'un second dispositif de mesure, distinct du premier, la connaissance de l'épaisseur permettant bien entendu de déterminer le diamètre intérieur du tube.

Cette technique connue, utilisant deux dispositifs, est une technique coûteuse.

On connaît également une autre technique permettant de déterminer le diamètre intérieur et le diamètre extérieur d'un tube transparent, cette technique étant mise en oeuvre dans un appareil commercialisé par la société YORK TECHNOLOGY sous la référence P101. Selon cette autre technique, le diamètre intérieur et le diamètre extérieur du tube sont déterminés grâce à des mesures d'indice optique et le tube doit être placé dans un liquide adaptateur d'indice.

Cette autre technique connue est inadaptée à la mesure "en continu" de caractéristiques géométriques d'un tube en cours de fabrication qui devrait défiler devant ledit appareil.

La présente invention a pour but de remédier aux inconvénients précédents, en proposant un procédé et un dispositif de caractérisation géométrique de tubes transparents dont la mise en oeuvre est moins coûteuse que celle de la première technique connue, mentionnée plus haut et qui sont bien adaptés à la mesure "en continu" de caractéristiques géométriques d'un tube en cours de fabrication.

On connaît, par US-A-4 859 861, un procédé et un dispositif de caractérisation géométrique d'un tube, qui sont respectivement conformes aux préambules des revendications 1 et 7.

On connaît aussi, par FR-A-2 379 064, un procédé de surveillance de la concentricité d'un revêtement sensiblement transparent.

De façon précise, la présente invention a tout d'abord pour objet un procédé de caractérisation géométrique d'un tube, conformément à la revendication 1.

On ne sortirait donc pas du cadre de l'invention en déterminant non pas le diamètre intérieur et le diamètre extérieur du tube mais le rayon intérieur et le rayon extérieur de ce tube.

Certes, on connaît déjà par un article de L.S. WATKINS, publié dans la revue APPLIED OPTICS, volume 18, n°13, 1 juillet 1979, p.2214 à 2222, une technique permettant de déterminer le rapport des indices de réfraction et le profil de gradient d'une préforme pour fibres optiques à gradient d'indice. Cependant, cette technique connue est très différente du procédé objet de la présente invention. En effet, selon cette technique connue, on fait des mesures sur des préformes pour fibres optiques à gradient d'indice et non pas sur des tubes et l'on mesure des angles de déviation de faisceaux lumineux alors que, dans la présente invention, on utilise des faisceaux lumineux non déviés.

En outre, cette technique connue impose l'utilisation d'un liquide adaptateur d'indice alors que, dans la présente invention, le tube est placé dans l'air, ce qui permet de faire des mesures directement à la sortie d'un four de fabrication de tubes en verre par exemple.

Selon un mode de mise en oeuvre particulier du procédé objet de l'invention, on détermine le diamètre intérieur et le diamètre extérieur ou les rayons correspondant respectivement à ces diamètres, dans une pluralité de plans de coupe qui sont espacés les uns des autres le long de l'axe du tube, afin de caractériser géométriquement le tube dans ces plans de coupe.

Selon un autre mode de mise en oeuvre particulier, on fait tourner le tube autour de son axe et l'on détermine le diamètre extérieur du tube ou le rayon correspondant à ce diamètre, dans ledit plan de coupe, en une pluralité de points de la paroi externe du tube situés dans ce plan de coupe.

Ceci permet de vérifier que la paroi externe du tube est "cylindrique" c'est-à-dire de vérifier que, si le tube a une certaine ovalité, celle-ci ne dépasse pas une limite fixée à l'avance.

Selon un autre mode de mise en oeuvre particulier, on fait tourner le tube autour de son axe, on détermine l'écart susceptible d'exister entre le diamètre intérieur et le diamètre extérieur du tube dans le plan de coupe, en une pluralité de points du tube situés dans ce plan de coupe, on oriente le tube de façon que le plan diamétral du tube, qui contient le point correspondant à l'écart minimum, soit perpendiculaire à un plan de référence qui est parallèle au faisceau incident, on détermine, pour chacun des deux points dudit plan diamétral qui sont diamétralement opposés sur la paroi interne du tube, la distance, par rapport au plan de référence, de l'un des faisceaux non déviés qui se réfléchissent au moins une fois à l'interface paroi interne-air et l'on détermine, au moyen des deux distances ainsi obtenues, le décalage qui est susceptible d'exister entre l'axe de la paroi interne et l'axe de la paroi externe.

Ceci permet de vérifier la "coïncidence" entre l'axe de la paroi interne et l'axe de la paroi externe dudit tube c'est-à-dire de vérifier que l'écart qui pourrait exister entre ces deux axes est inférieur à une valeur que l'on s'est fixé.

On peut utiliser, comme faisceaux non déviés, ceux qui sont tangents à la paroi externe du tube et ceux, parmi les autres faisceaux non déviés, qui se réfléchissent au moins une fois à l'interface paroi interne-air.

Le tube peut être un tube de verre qui est destiné à la fabrication d'une préforme pour fibres optiques et dont la paroi interne est destinée à être recouverte d'un revêtement vitreux pour la formation du coeur des fibres optiques. Alors, on peut caractériser géométriquement le tube, conformément au procédé objet de l'invention, avant et après formation du revêtement vitreux sur la paroi interne.

La présente invention concerne également un dispositif de caractérisation géométrique d'un tube, conformément à la revendication 7.

Selon un mode de réalisation particulier du dispositif objet de l'invention, celui-ci comprend en outre des moyens de déplacement relatif du tube par rapport aux moyens prévus pour balayer celui-ci et aux moyens de photodétection.

Selon un autre mode de réalisation particulier, le dispositif objet de l'invention comprend en outre des moyens de rotation du tube autour de son axe.

Enfin, dans une réalisation particulière du dispositif objet de l'invention, les moyens prévus pour balayer le tube comprennent :

- une première optique convergente dont un foyer est sur l'axe du tube et dont l'axe optique est perpendiculaire audit axe du tube,
- un miroir oscillant qui est placé en l'autre foyer de la première optique et qui reçoit la lumière des moyens d'émission, une deuxième optique convergente, de même distance focale que la première, étant placée symétriquement de celle-ci par rapport à l'axe du tube et de façon que son axe optique soit confondu avec l'axe optique de la première optique, de sorte que l'un des foyers de la deuxième optique est sur l'axe du tube, au même point que ledit foyer de la première optique,

et en ce que les moyens de photodétection comprennent un photodétecteur sensiblement ponctuel qui est placé en l'autre foyer de la deuxième optique.

La présente invention sera mieux comprise à la lecture de la description suivante d'exemples de réalisation donnés à titre purement indicatif et nullement limitatif en référence aux dessins annexés sur lesquels :

- la figure 1 est une vue schématique d'un mode de réalisation particulier du dispositif objet de l'invention,
- la figure 2A illustre schématiquement les différents faisceaux lumineux non déviés utilisés dans la présente invention,
- la figure 2B illustre schématiquement et partiellement les signaux fournis par un photodétecteur faisant partie du dispositif représenté sur la figure 1, en réponse aux faisceaux lumineux non déviés,
- la figure 3A illustre certains de ces signaux, en considérant seulement deux des faisceaux non déviés,
- les figures 3B et 3C illustrent schématiquement un procédé conforme à l'invention,
- la figure 4 illustre schématiquement les trajets de deux des faisceaux non déviés, l'un étant tangent à la paroi externe du tube et l'autre se réfléchissant une fois sur l'interface paroi interne-air,
- la figure 5 illustre schématiquement un autre faisceau lumineux non dévié qui se réfléchit deux fois sur cette interface paroi interne-air et une fois à l'interface paroi externe-air,
- la figure 6 illustre schématiquement un autre faisceau lumineux non dévié qui se réfléchit trois fois à l'interface paroi interne-air et deux fois à l'interface paroi externe-air,
- la figure 7 illustre schématiquement des moyens de translation du tube, dont peut être muni le dispositif schématiquement représenté sur la figure 1,
- la figure 8 illustre schématiquement des moyens de rotation du tube autour de son axe, dont peut être également muni ce dispositif de la figure 1,
- la figure 9 illustre schématiquement deux faisceaux lumineux non déviés que l'on peut utiliser pour déterminer un éventuel écart entre l'axe de la paroi interne et l'axe de la paroi externe du tube, et
- la figure 10 illustre schématiquement l'ovalité et ledit écart entre les axes, que le tube peut éventuellement présenter.

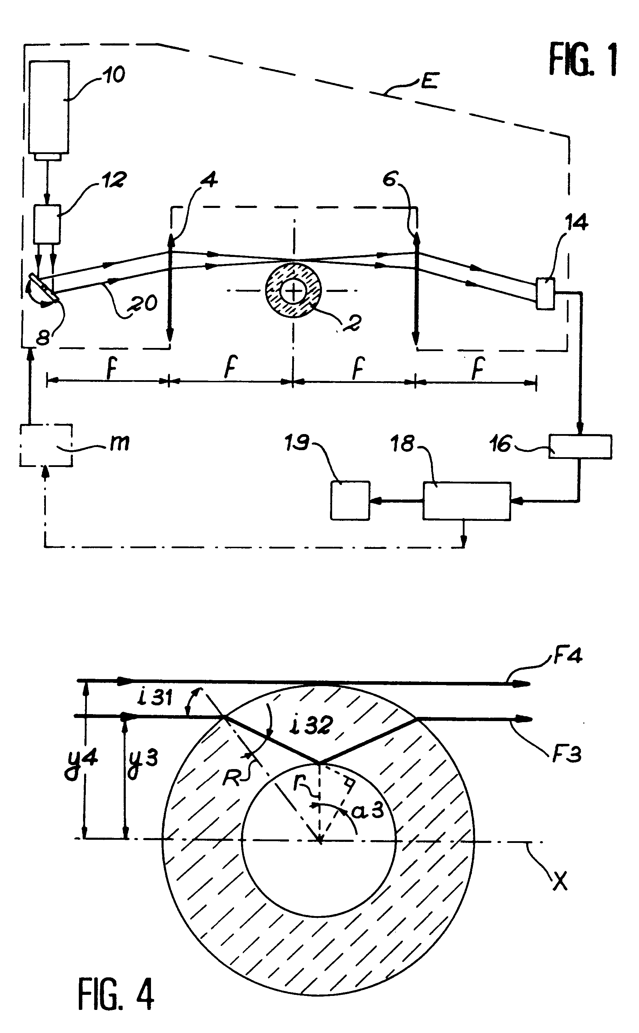

Sur la figure 1, on a représenté schématiquement un mode de réalisation particulier du dispositif objet de l'invention. Le dispositif représenté sur la figure 1 est destiné à la caractérisaton géométrique d'un tube transparent 2, par exemple en silice, placé sur un moyen de support non représenté. Les parois interne et externe du tube sont sensiblement cylindriques et coaxiales.

Le dispositif de la figure 1 comprend une première optique convergente 4 et une deuxième optique convergente 6, identique à la première. Il s'agit par exemple de deux lentilles simples, convergentes, qui ont la même distance focale f. Les axes optiques des lentilles 4 et 6 sont confondus et perpendiculaires à l'axe du tube 2. De plus, les lentilles 4 et 6 sont symétriques l'une de l'autre par rapport à l'axe du tube 2 et ont un foyer commun sur cet axe.

Le dispositif comprend également un miroir plan 8 commandé par des moyens non représentés qui le font osciller autour d'un axe de rotation parallèle à l'axe du tube 2, cet axe de rotation étant contenu dans la face plane réflectrice du miroir 8. De plus, le miroir oscillant 8 est placé de façon que l'autre foyer de la lentille 4 soit sur ladite face réflectrice et sur l'axe de rotation du miroir.

Le dispositif comprend aussi une source de lumière 10, telle qu'un laser, prévue pour envoyer un faisceau lumineux sur le miroir oscillant 8 par l'intermédiaire d'un collimateur 12 prévu pour augmenter le diamètre du faisceau issu du laser.

Le dispositif comprend enfin un photodétecteur 14, tel qu'une photodiode réceptrice, qui est sensiblement ponctuel, c'est-à-dire qui a un faible angle d'ouverture, de l'ordre de 2 milliradians par exemple, des moyens 16 d'acquisition des signaux électriques fournis par la photodiode 14, des moyens électroniques 18 de traitement des informations ainsi acquises et des moyens 19 d'affichage des résultats obtenus grâce aux moyens 18. La face réceptrice de la photodiode 14 est placée en l'autre foyer de la lentille 6, sur l'image (fixe) du miroir oscillant 8.

Ainsi, le miroir oscillant 8 permet de balayer le tube 2 par un faisceau lumineux qui est focalisé sur le plan qui passe par l'axe du tube et qui est perpendiculaire à l'axe optique commun aux deux lentilles 4 et 6. Le faisceau lumineux qui balaye le tube se déplace parallèlement à lui-même au cours du balayage du tube.

Les moyens d'acquisition 16 comprennent par exemple une carte d'acquisition qui mémorise l'image d'un balayage du tube et qui est par exemple du genre de celle qui est commercialisée par la Société KEITHLEY sous la référence DSH 16F, et les moyens de traitement 18 comprennent un ordinateur, par exemple de type JASMIN, qui détermine, au moyen des informations mémorisées dans la carte d'acquisition, les diamètres intérieur et extérieur du tube 2, comme on le verra par la suite.

A titre purement indicatif et nullement limitatif, pour caractériser un tube de silice dont le diamètre extérieur est inférieur à 70 mm, on utilise : un laser He-Ne dont la cohérence permet de balayer le tube par un faisceau qui, au niveau du tube, forme un spot lumineux de quelques micromètres de diamètre, avec une amplitude de balayage de l'ordre de 70 mm, et des lentilles ne présentant quasiment aucune aberration, ce qui permet, en ce qui concerne la lentille 4, de conserver la qualité de focalisation du laser, avec f=100 mm ; le laser émet un faisceau dont la longueur d'onde vaut 633 nm et qui a un diamètre de 0,8 mm ; on fixe la dimension du spot au niveau du tube à 20 micromètres (diamètre de tache focale), ce qui impose au faisceau lumineux 20 tombant sur la lentille 4 d'avoir un diamètre de l'ordre de 4 mm, d'où la nécessité d'utiliser un collimateur 12 qui multiplie par 5 le diamètre du faisceau issu du laser.

La photodiode 14 ne reçoit que la lumière des faisceaux non déviés à la traversée du tube (et bien entendu la lumière des faisceaux qui passent au-dessus et au-dessous du tube et qui, comme lesdits faisceaux non déviés, sont focalisés par la lentille 6 sur la photodiode). Les faisceaux réfléchis à l'interface paroi interne du tube-air et réfractés par l'épaisseur de silice du tube dans un angle supérieur à l'angle d'ouverture de la photodiode ne sont pas "vus" par cette photodiode.

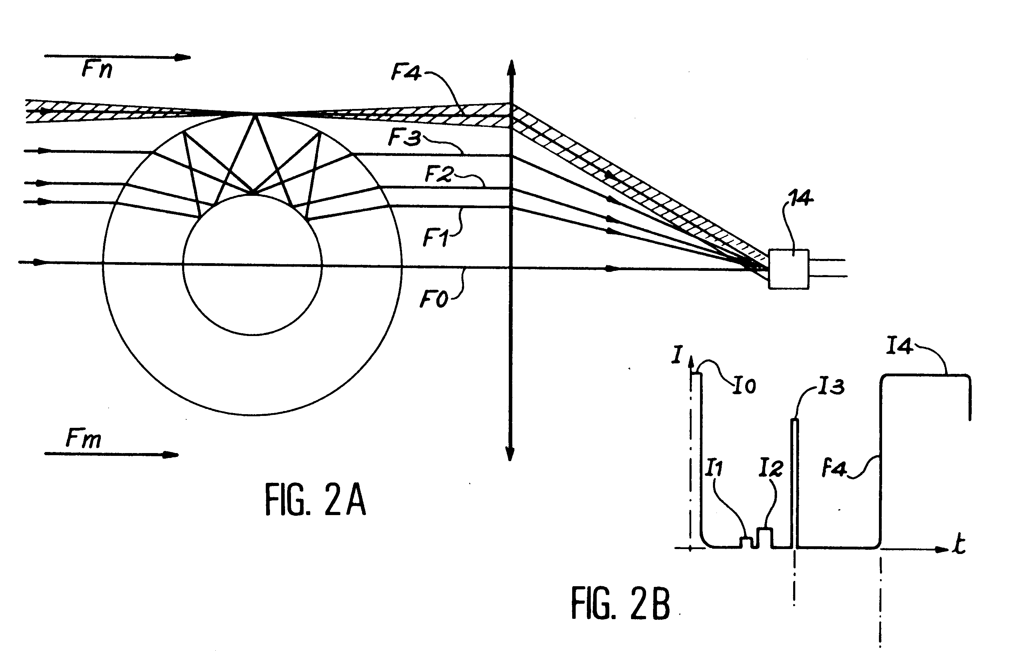

On a trouvé que, au cours d'un balayage du tube, seuls cinq faisceaux ne sont pas déviés ou réfléchis par ce tube. Ces cinq faisceaux sont représentés sur la figure 2A. Ce sont : le faisceau F0 qui passe par l'axe du tube, le faisceau F1 qui ressort du tube après cinq réflexions (trois sur le dioptre interne air-silice et deux sur le dioptre externe air-silice), le faisceau F2 qui ressort du tube après trois réflexions (deux sur le dioptre interne air-silice et une sur le dioptre externe air-silice), le faisceau F3 qui ressort du tube après une réflexion sur le dioptre interne air-silice et le faisceau F4 qui est tangent à la paroi externe du tube.

Par "dioptre interne (respectivement externe) air-silice", on entend l'interface entre la paroi interne (respectivement externe) du tube et l'air.

On utilise deux des faisceaux F1 à F4 pour déterminer le rayon intérieur r (ou le diamètre intérieur 2r) du tube et le rayon extérieur R (ou le diamètre extérieur 2R) du tube, par exemple le faisceau F4, qui est lié de façon simple à R comme on le verra par la suite, et l'un des faisceaux F1, F2, F3.

Sur la figure 2B, on a représenté les variations de l'intensité I du signal fourni par la photodiode 14 en fonction du temps t au cours d'un balayage du tube de bas en haut de celui-ci. On notera que seule une moitié de la courbe I(t) est représentée sur la figure 2B, cette moitié correspondant à la partie du balayage qui est limitée, d'un côté, par le faisceau F0 et de l'autre, par le dernier faisceau Fn du balayage, qui passe au-dessus du tube. On a représenté sur la figure 2A l'autre faisceau Fm qui limite le balayage et qui passe en-dessous du tube. Ainsi le balayage est limité par Fm et Fn et peut aller de Fm et Fn avec retour à Fm.

En revenant à la figure 2B, on observe, de gauche à droite, un pic intense I0 correspondant à F0, un pic I1 de très faible intensité, correspondant à F1, un pic I2 un peu plus intense que le précédent et correspondant à F2, un pic I3 bien plus intense que I1 et I2 mais un peu moins intense que I0, ce pic I3 correspondant à F3, et un créneau I4 dont l'intensité est sensiblement égale à celle de I0, dont le front montant f4 correspond à F4 et qui est associé aux faisceaux allant de F4 à Fm.

On va maintenant expliquer comment déterminer le diamètre intérieur 2r et le diamètre extérieur 2R du tube.

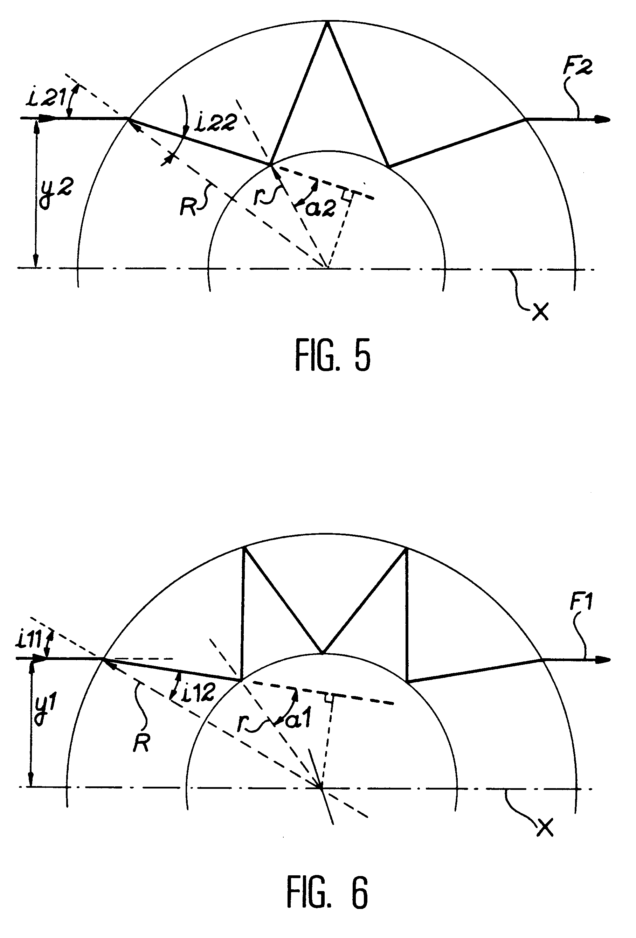

En considérant un plan, appelé plan de référence, qui contient l'axe du tube et l'axe optique X commun aux deux lentilles (figure 4), on constate que, lors d'un balayage entre les deux faisceaux Fm et Fn, on obtient en fait deux faisceaux du genre du faisceau Fi, i allant de 1 à 4. L'un de ces deux faisceaux est situé d'un côté du plan de référence (voir la figure 2A) et l'autre de ces deux faisceaux, qui n'est pas représenté, est situé de l'autre côté du plan de référence.

En conséquence, les faisceaux non déviés vont par couples, excepté le faisceau F0.

C'est pourquoi, en vue de calculer les quantités 2R et 2r, on détermine, pour deux de ces couples, la distance entre les deux faisceaux de chacun de ces deux couples.

On utilise par exemple les deux faisceaux de type F3 (une réflexion sur le dioptre interne air-silice) et les deux faisceaux de type F4 (tangents à la paroi externe du tube).

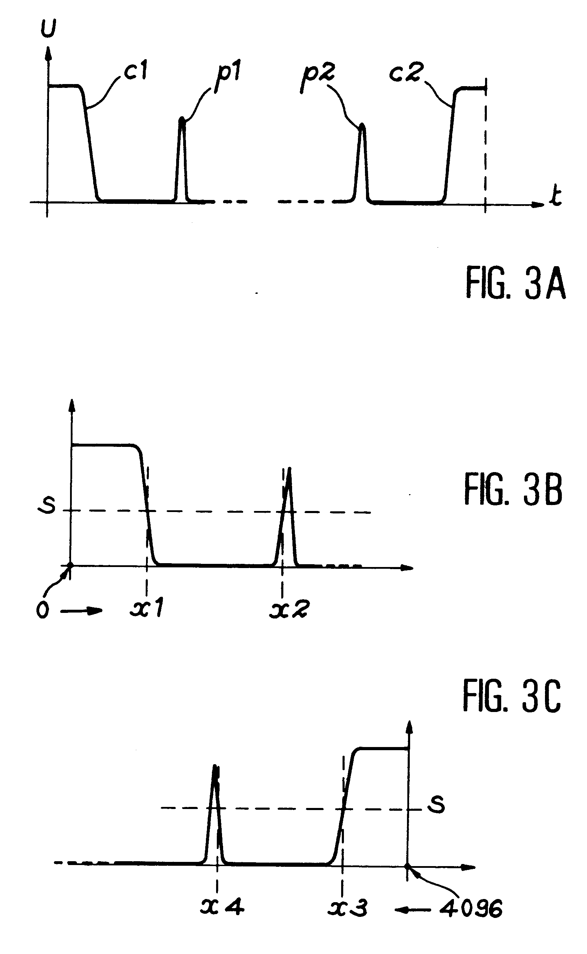

Lors d'un balayage du tube entre les faisceaux-limites Fm et Fn, le photodétecteur 14 fournit un signal analogique U (en volts) fonction du temps t. La partie utile de ce signal est représentée sur la figure 3A où l'on voit le début t1 et la fin t2 du balayage, les pics p1 et p2 correspondant aux deux faisceaux de type F3 et les créneaux c1 et c2, dont les "fronts" correspondent aux deux faisceaux de type F4. Les pointillés correspondent à la partie non utile du signal U.

La résolution spatiale Rs de ce signal est donnée par le rapport de la longueur balayée au diamètre du spot, soit :

$$Rs = 60/(20.10^{-3}) = 3000 \text{ "points" de résolution}$$

pour un balayage de 60 mm avec un spot de 20 micromètres.

Le signal U est ensuite mémorisé sur la carte d'acquisition DSH 16F dont est équipé l'ordinateur JASMIN, avec une résolution en ordonnée et en abscisse de 12 bits (4096 points d'abscisse avec, pour chaque abscisse, 4096 niveaux possibles). Donc, en abscisse, la résolution de la mémoire ne pénalise pas la résolution intrinsèque du laser.

On dispose alors d'un signal numérique. Les unités sont arbitraires : chaque abscisse discrète, comprise entre 0 et 4096, a un niveau discret, compris entre 0 et 4096.

L'ordinateur détermine et mémorise quatre abscisses x1, x2, x3 et x4 en coïncidence avec un seuil de déclenchement déterminé S, en incrémentant à partir de 0 pour les deux premières abscisses x1 et x2 et en décrémentant à partir de 4096 pour les deux autres abscisses x3 et x4.

Ceci est illustré schématiquement sur les figures 3B et 3C où l'on voit le seuil S et les abscisses x1, x2, x3 et x4.

Le diamètre extérieur 2R du tube est proportionnel à la différence x3-x1 et le diamètre intérieur du tube est calculé à partir de la différence x4-x2. Ces différences sont mémorisées.

L'opération (balayage, mémorisation) est effectuée plusieurs fois, par exemple huit fois, pour obtenir une bonne précision.

Au préalable, afin de convertir l'échelle des abscisses en millimètres, on a déterminé un facteur de proportionnalité à l'aide d'un tube de diamètre extérieur connu ou d'un cylindre plein de diamètre connu (mis en place dans le dispositif de la figure 1 avant la caractérisation du tube 2) et l'on a mémorisé ce facteur de proportionnalité dans l'ordinateur.

A partir des différences mémorisées et converties en mm, l'ordinateur calcule le diamètre extérieur 2R et le diamètre intérieur 2r du tube 2 au moyen de formules que l'on indique ci-après et ce, pour les huit mesures effectuées. Ensuite, l'ordinateur calcule la moyenne des huit valeurs "2R" obtenues et la moyenne des huit valeurs "2r" obtenues et affiche les résultats.

En se reportant aux figures 4 à 6, on voit qu'on a repéré, sur ces figures, la distance entre chacun des faisceaux non déviés F1 à F4 et le plan de référence. Ces distances sont notées y1 à y4 respectivement pour les faisceaux F1 à F4.

En se reportant plus particulièrement à la figure 4 où sont représentés des faisceaux F3 et F4 que l'on a utilisé dans la méthode de détermination des diamètres intérieur et extérieur, précédemment exposée, on voit, de façon évidente, que 2R (proportionnel à x3-x1) est égal à 2.y4 et que 2.y3 (proportionnel à x4-x2) peut être déterminé en utilisant les angles i31, i32 et a3 indiqués sur la figure 4 :

$$a3 = i31 - i32$$
$$y3 = n.r.\cos(a3).$$

On en déduit :

$$r = y3.n^{-1}.(1 - 1/2(\text{Arcsin}(y3/R) - \text{Arcsin}(y3/(nR)))^2)^{-1}$$

formule dans laquelle n représente l'indice optique du matériau dont est constitué le tube (la silice dans l'exemple considéré).

Au lieu d'utiliser les deux faisceaux de type F3, on peut utiliser les deux faisceaux de type F2 (figure 5). Au moyen des angles i21, i22 et a2 indiqués sur cette figure 5, on peut écrire :

$$a2 = pi/4 - i21/2 + i22$$
$$y2 = n.r.\sin(a2).$$

On en déduit :

$$r = y2.n^{-1}.(\sin(pi/4 - 1/2\text{Arcsin}(y2/R) + \text{Arcsin}(y2/(nR))))^{-1}$$

Dans les formules ci-dessus, pi représente le nombre bien connu qui vaut environ 3,1416.

Au lieu d'utiliser les deux faisceaux de type F3, on peut également utiliser les deux faisceaux de type F1 (figure 6). A l'aide des angles i11, i12 et a1 indiqués sur cette figure 6, on peut écrire :

$$a1 = pi/6 - i11/3 + i12$$
$$y1 = n.r.\sin(a1).$$

On en déduit :

$$r = y1.n^{-1}.(\sin(pi/6 - 1/3\text{Arcsin}(y1/R) + \text{Arcsin}(y1/(nR))))^{-1}$$

On notera que plus le tube est mince, plus y3 se rapproche de R, plus il est difficile de séparer I3 et I4 (figure 3) et plus il est difficile de déterminer r. Il est donc intéressant d'utiliser les faisceaux de type F1, c'est-à-dire 2.y1 ou les faisceaux de type F2, c'est-à-dire 2.y2 pour la caractérisation de tubes de faibles épaisseurs.

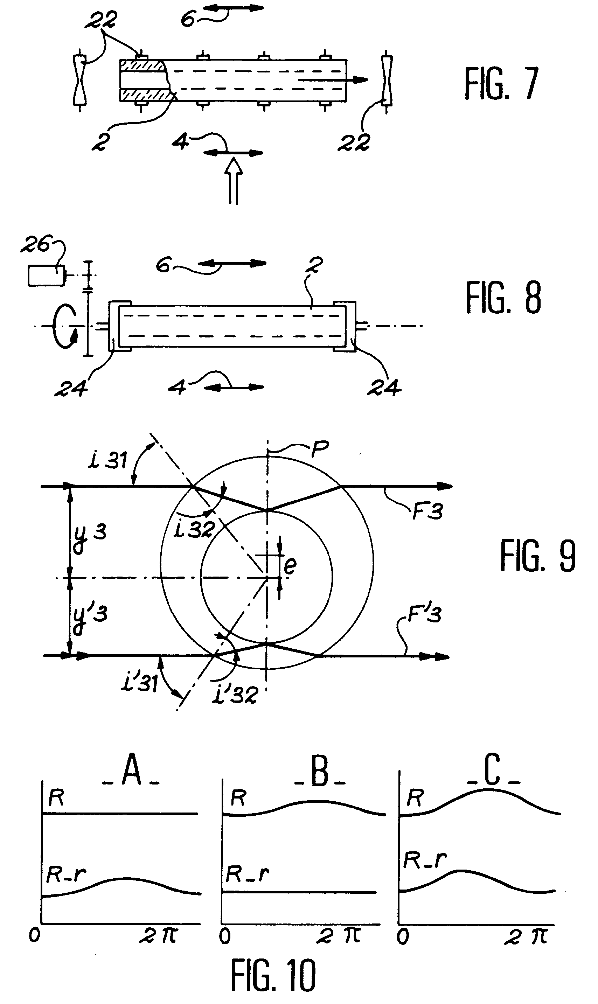

La détermination de 2R et 2r peut être faite à plusieurs niveaux du tube 2. A cet effet, on peut déplacer celui-ci en translation entre les deux lentilles 4 et 6, parallèlement à l'axe du tube, grâce à des moyens appropriés 22, tels qu'un chemin de roulement qui permet la translation du tube tout en maintenant celui-ci (figure 7).

En variante, le tube est fixe et l'on déplace en translation, parallèlement à l'axe du tube, l'ensemble de mesure E (figure 1) comprenant le laser 10, le collimateur 12, le miroir oscillant 8, les lentilles 4 et 6 et le photodétecteur 14.

Le déplacement de l'ensemble E peut être commandé par un moteur m, lui-même commandé par l'ordinateur 18 qui donne l'ordre au moteur m, lorsque les mesures dans un plan de coupe sont terminées, de déplacer en translation l'ensemble E d'un pas pour effectuer les mesures dans le plan de coupe suivant.

Comme on le verra par la suite, on peut avoir besoin de faire tourner le tube autour de son axe, entre les deux lentilles 4 et 6. A cet effet, on peut utiliser deux mors 24 (figure 8) entre lesquels est pris le tube et que l'on anime d'un mouvement de rotation autour de l'axe du tube, grâce à des moyens appropriés 26.

Selon l'invention, on peut contrôler le rayon (ou le diamètre) intérieur et le rayon (ou le diamètre) extérieur du tube pour s'assurer du fait qu'ils ont l'un et l'autre des valeurs acceptables et ce contrôle peut être fait pour une ou plusieurs sections transversales du tube.

Dans certains cas, on peut avoir en outre besoin de vérifier que le tube est bien "cylindrique", c'est-à-dire de vérifier que, pour une ou plusieurs sections transversales, dans chacune de celles-ci la quantité R fluctue dans un intervalle étroit que l'on s'est fixé.

On peut également avoir besoin de vérifier que les parois interne et externe du tube sont bien "coaxiales" c'est-à-dire de vérifier que l'écart entre l'axe de la paroi externe du tube et l'axe de la paroi interne du tube est inférieur à une faible valeur que l'on a fixée à l'avance.

Ceci est vrai en particulier pour un tube de silice qui est destiné à la fabrication d'une préforme pour fibres optiques et sur la paroi interne duquel on dépose un revêtement vitreux destiné à la formation du coeur des fibres optiques. Il est important de caractériser géométriquement un tel tube avant et après le dépôt du revêtement vitreux car un tube ayant de mauvaises caractéristiques géométriques donnerait de mauvaises fibres optiques.

Pour faire cette caractérisation, étant donné un tube de silice qui vient d'être usiné, on commence par vérifier que la paroi externe est bien cylindrique. Il suffit que le contrôle correspondant soit fait à une extrémité du tube ou éventuellement en ses deux extrémités. On sait par ailleurs que, compte tenu du procédé de fabrication d'un tel tube de silice, si la paroi externe est effectivement cylindrique alors il en est de même pour la paroi interne.

On contrôle ensuite la coaxialité des parois interne et externe du tube. Un contrôle en une extrémité ou éventuellement aux deux extrémités du tube est également suffisant.

Enfin, si les deux contrôles précédents (paroi externe cylindrique et coaxialité des parois) donnent des résultats acceptables, on contrôle R, r et R-r dans plusieurs sections transversales du tube, par exemple tous les 10 mm pour un tube de 600 mm de long.

Si l'un des contrôles précédents donne de mauvais résultats, il faut usiner à nouveau le tube pour corriger ses défauts géométriques.

On fait les mêmes contrôles après avoir déposé le revêtement vitreux interne et l'on contrôle alors également l'épaisseur du revêtement déposé, ce dernier contrôle étant effectué dans plusieurs sections transversales du tube, régulièrement espacées les unes des autres suivant la longueur du tube de silice.

Le procédé de fabrication de ce dernier est tel que s'il y a une ovalisation du tube, celle-ci se produit de façon identique sur la paroi interne et sur la paroi externe. Il est donc possible de faire des mesures d'ovalisation sur la paroi externe du tube et d'utiliser la paroi interne pour faire des mesures d'excentrement (écart entre les axes respectifs de la paroi interne et de la paroi externe).

Pour s'assurer du fait que la paroi externe est cylindrique, on fait tourner le tube pas à pas autour de son axe et, à chaque pas, on détermine la quantité 2.y4. Si toutes les quantités 2.y4 ainsi déterminées sont contenues dans un intervalle étroit que l'on a fixé à l'avance, on considère que la paroi externe est cylindrique.

La mesure d'excentrement est expliquée sur la figure 9 et l'on voit sur la figure 10 comment varient le rayon extérieur R et l'épaisseur R-r du tube pour une rotation complète de ce tube dans le cas (A) d'un excentrement seul, dans le cas (B) d'une ovalisation seule et dans le cas (C) d'une ovalisation associée à un excentrement.

En revenant à la figure 9, pour faire des mesures d'excentrement, on fait tourner le tube pas à pas autour de son axe et à chaque pas on détermine R, r puis R-r. Ensuite, on détermine le minimum des quantités R-r ainsi obtenues et l'on dispose le tube de façon que le plan diamétral P (figure 9) correspondant à ce minimum soit perpendiculaire à l'axe optique X des lentilles. Ensuite, dans cette position, on détermine la quantité y3 correspondant au faisceau F3 relatif à la partie supérieure du tube et la quantité homologue y'3 correspondant au faisceau F'3, homologue de F3 (une seule réflexion à l'interface paroi interne-air) mais relatif à la partie inférieure du tube (voir figure 9).

En notant e l'excentrement, on peut écrire :

$$r + e = y3.n^{-1}.(\cos(i31 - i32))^{-1}$$
$$r - e = y'3.n^{-1}.(\cos(i'31 - i'32))^{-1}$$

Les angles i31, i32, i'31 et i'32 sont indiqués sur la figure 9 et les cosinus sont calculables (voir la description relative à la figure 4). En ajoutant membre à membre les deux égalités ci-dessus, on obtient le diamètre interne du tube et en les soustrayant membre à membre, on obtient le double de l'excentrement e.

## Revendications

1. Procédé de caractérisation géométrique d'un tube (2) qui est transparent à au moins une lumière et dont les parois interne et externe sont sensiblement cylindriques et coaxiales, procédé selon lequel on balaye le tube (2), placé dans l'air, par un faisceau incident de ladite lumière, faisceau que l'on déplace parallèlement à lui-même dans un plan de coupe perpendiculaire à l'axe du tube, procédé caractérisé en ce qu'on détecte exclusivement les faisceaux non déviés, ces faisceaux non déviés comprenant :

    i) le faisceau (F0) qui passe par l'axe du tube, et

    ii) les faisceaux (F1, F2, F3) qui ressortent du tube après au moins une réflexion sur l'interface entre la paroi interne du tube et l'air ainsi que les faisceaux (F4) qui sont tangents à la paroi externe du tube (2), ces faisceaux allant par couples, l'un des deux faisceaux de chaque couple étant situé d'un côté d'un plan de référence, qui contient l'axe du tube et qui est parallèle au faisceau incident, et l'autre de ces deux faisceaux étant situé de l'autre côté de ce plan de référence,

    on détermine pour deux de ces couples la distance entre les deux faisceaux de chacun de ces deux couples et l'on détermine, au moyen de ces distances, le diamètre intérieur et le diamètre extérieur du tube ou les rayons correspondant respectivement à ces diamètres, au niveau dudit plan de coupe.

2. Procédé selon la revendication 1, caractérisé en ce que l'on détermine le diamètre intérieur et le diamètre extérieur, ou les rayons correspondant respectivement à ces diamètres, dans une pluralité de plans de coupe qui sont espacés les uns des autres le long de l'axe du tube.

3. Procédé selon la revendication 1, caractérisé en ce que l'on fait tourner le tube (2) autour de son axe et l'on détermine le diamètre extérieur du tube, ou le rayon correspondant à ce diamètre, dans le plan de coupe, en une pluralité de points de la paroi externe du tube situés dans ce plan de coupe.

4. Procédé selon la revendication 1, caractérisé en ce que l'on fait tourner le tube (2) autour de son axe, on détermine l'écart susceptible d'exister entre le diamètre intérieur et le diamètre extérieur du tube (2) dans le plan de coupe, en une pluralité de points du tube situés dans ce plan de coupe, on oriente le tube de façon que le plan diamétral du tube, qui contient le point correspondant à l'écart minimum, soit perpendiculaire à un plan de référence qui est parallèle au faisceau incident, on détermine, pour chacun des deux points dudit plan diamétral qui sont diamétralement opposés sur la paroi interne du tube, la distance, par rapport au plan de référence, de l'un des faisceaux non déviés qui se réfléchissent au moins une fois à l'interface paroi interne-air et l'on détermine, au moyen des deux distances ainsi obtenues, le décalage (e) qui est susceptible d'exister entre l'axe de la paroi interne et l'axe de la paroi externe.

5. Procédé selon l'une quelconque des revendications 1 à 4, caractérisé en ce qu'on utilise, comme faisceaux non déviés, ceux (F4) qui sont tangents à la paroi externe du tube et ceux parmi les autres faisceaux non déviés (F1, F2, F3), qui se réfléchissent au moins une fois à l'interface paroi interne-air.

6. Procédé selon l'une quelconque des revendications 1 à 5, caractérisé en ce que, le tube (2) étant un tube de verre qui est destiné à la fabrication d'une préforme pour fibres optiques et dont la paroi interne est destinée à être recouverte d'un revêtement vitreux pour la formation du coeur des fibres optiques, on caractérise géométriquement le tube avant et après formation du revêtement vitreux sur la paroi interne.

7. Dispositif de caractérisation géométrique d'un tube (2) qui est transparent à au moins une lumière et dont les parois interne et externe sont sensiblement cylindriques et coaxiales, ce dispositif comprenant :

    - des moyens (10) d'émission de ladite lumière, et

    - des moyens (4, 8) prévus pour balayer le tube, placé dans l'air, par un faisceau lumineux incident, issu desdits moyens d'émission, en déplaçant ce faisceau parallèlement à lui-même dans un plan de coupe perpendiculaire à l'axe du tube,

    dispositif caractérisé en ce qu'il comprend en outre :

    - des moyens (14) de photodétection prévus pour détecter exclusivement les faisceaux non déviés, ces faisceaux non déviés comprenant :

i) le faisceau (F0) qui passe par l'axe du tube et

ii) les faisceaux (F1, F2, F3) qui ressortent du tube après au moins une réflexion sur l'interface entre la paroi interne du tube et l'air ainsi que les faisceaux (F4) qui sont tangents à la paroi externe du tube (2), ces faisceaux allant par couples, l'un des deux faisceaux de chaque couple étant situé d'un côté d'un plan de référence, qui contient l'axe du tube et qui est parallèle au faisceau incident, et l'autre de ces deux faisceaux étant situé de l'autre côté de ce plan de référence, et

- des moyens (16, 18) prévus pour déterminer pour deux de ces couples la distance entre les deux faisceaux de chacun de ces couples et pour déterminer, au moyen de ces distances, le diamètre intérieur et le diamètre extérieur du tube, ou les rayons correspondant respectivement à ces diamètres, au niveau dudit plan de coupe.

8. Dispositif selon la revendication 7, caractérisé en ce qu'il comprend en outre des moyens (22) de déplacement relatif du tube par rapport aux moyens (4, 8) prévus pour balayer celui-ci et aux moyens (14) de photodétection.

9. Dispositif selon l'une quelconque des revendications 7 et 8, caractérisé en ce qu'il comprend en outre des moyens (24, 26) de rotation du tube autour de son axe.

10. Dispositif selon l'une quelconque des revendications 7 à 9, caractérisé en ce que les moyens (4, 8) prévus pour balayer le tube comprennent :

- une première optique convergente (4) dont un foyer est sur l'axe du tube (2) et dont l'axe optique est perpendiculaire audit axe du tube,

- un miroir oscillant (8) qui est placé en l'autre foyer de la première optique et qui reçoit la lumière des moyens d'émission, une deuxième optique convergente (6), de même distance focale que la première, étant placée symétriquement de celle-ci par rapport à l'axe du tube et de façon que son axe optique soit confondu avec l'axe optique de la première optique, de sorte que l'un des foyers de la deuxième optique est sur l'axe du tube, au même point que ledit foyer de la première optique,

et en ce que les moyens de photodétection comprennent un photodétecteur (14) sensiblement ponctuel qui est placé en l'autre foyer de la deuxième optique.

**Patentansprüche**

1. Verfahren zur geometrischen Charakterisierung eines Rohres (2), das wenigstens für eine Art Licht durchlässig ist und dessen innere und äußere Wand in etwa zylindrisch und koaxial sind, wobei man nach dem Verfahren das Rohr (2), das sich in Luft befindet, mit einem einfallenden Bündel dieses Lichts überstreicht, einem Bündel, das man in einer zur Rohrachse senkrechten Schnittebene parallel zu sich verschiebt,

wobei das Verfahren dadurch gekennzeichnet ist, daß man ausschließlich die nicht abgelenkten Bündel nachweist, wobei diese nicht abgelenkten Bündel

i) das Bündel (F0), das durch die Achse des Rohres geht, und

ii) die Bündel (F1, F2, F3), die nach wenigstens einer Reflexion an der Grenzfläche zwischen der inneren Rohrwand und der Luft aus dem Rohr austreten, sowie die Bündel (F4) umfassen, die tangential zur äußeren Wand des Rohres (2) sind, wobei diese Bündel paarweise auftreten, eines der beiden Bündel eines jeden Paares auf der einen Seite einer Bezugsebene liegt, die die Rohrachse enthält und die parallel zum einfallenden Bündel ist, und das andere der beiden Bündel auf der anderen Seite dieser Bezugsebene liegt,

und daß man für zwei dieser Paare den Abstand zwischen den beiden Bündeln jedes der beiden Paare bestimmt und mittels dieser Abstände den inneren Durchmesser und den äußeren Durchmesser des Rohres oder die Radien, die jeweils diesen Durchmessern auf der Höhe der besagten Schnittebene entsprechen, bestimmt.

2. Verfahren nach Anspruch 1, dadurch gekennzeichnet, daß man den inneren Durchmesser und den äußeren Durchmesser oder die Radien, die jeweils diesen Durchmessern entsprechen, in einer Vielzahl von Schnittebenen, die entlang der Rohrachse voneinander durch Abstände getrennt sind, bestimmt.

3. Verfahren nach Anspruch 1, dadurch gekennzeichnet, daß man das Rohr (2) um seine Achse drehen läßt und den äußeren Durchmesser des Rohres oder den diesem Durchmesser entsprechenden Radius in der Schnittebene in einer Vielzahl von Punkten der äußeren Rohrwand, die in dieser Schnittebene liegen, bestimmt.

**4.** Verfahren nach Anspruch 1, dadurch gekennzeichnet, daß man das Rohr (2) um seine Achse drehen läßt, daß man den möglicherweise bestehenden Unterschied zwischen dem inneren Durchmesser und dem äußeren Durchmesser des Rohres (2) in der Schnittebene in einer Vielzahl von Rohrpunkten, die in dieser Schnittebene liegen, bestimmt, daß man das Rohr derart orientiert, daß die diametrale Ebene des Rohres, die den dem minimalen Unterschied entsprechenden Punkt enthält, senkrecht auf einer Bezugsebene steht, die parallel zum einfallenden Bündel ist, daß man für jeden der beiden Punkte dieser diametralen Ebene, die sich auf der inneren Wand des Rohres diametral gegenüberliegen, den Abstand eines der nicht abgelenkten Bündel, die wenigstens einmal an der Grenzfläche zwischen innerer Wand und Luft reflektiert werden, von der Bezugsebene bestimmt, und daß man mittels der zwei so erhaltenen Abstände die Abweichung (e) bestimmt, die möglicherweise zwischen der Achse der inneren Wand und der Achse der äußeren Wand besteht.

**5.** Verfahren nach einem der Ansprüche 1 bis 4, dadurch gekennzeichnet, daß man als nicht abgelenkte Bündel diejenigen (F4) benutzt, die tangential zur äußeren Wand des Rohres sind, und diejenigen unter den anderen nicht abgelenkten Bündeln (F1, F2, F3), die wenigstens einmal an der Grenzfläche zwischen innerer Wand und Luft reflektiert werden.

**6.** Verfahren nach einem der Ansprüche 1 bis 5, dadurch gekennzeichnet, daß, wenn das Rohr (2) ein Glasrohr ist, das vorgesehen ist zur Herstellung einer Vorform für optische Fasern und dessen innere Wand bestimmt ist, zur Bildung des Kerns der optischen Fasern mit einer Glasschicht bedeckt zu werden, man das Rohr vor und nach der Bildung der Glasschicht auf der inneren Wand geometrisch charakterisiert.

**7.** Vorrichtung zur geometrischen Charakterisierung eines Rohres (2), das für wenigstens eine Art Licht durchlässig ist und dessen innere und äußere Wand in etwa zylindrisch und koaxial sind, wobei diese Vorrichtung
   - Einrichtungen (10) zur Emission dieses Lichts und
   - Einrichtungen (4, 8) umfaßt, die dazu vorgesehen sind, das Rohr, das sich in Luft befindet, mit einem einfallenden Lichtbündel, das von den Emissionseinrichtungen ausgeht, zu überstreichen, indem man dieses Bündel parallel zu sich in einer zur Rohrachse senkrechten Schnittebene verschiebt,
      wobei die Vorrichtung dadurch gekennzeichnet ist, daß sie ferner
   - Einrichtungen (14) zur Lichtdetektion, vorgesehen, um ausschließlich die nicht abgelenkten Bündel nachzuweisen, wobei diese nicht abgelenkten Bündel
      i) das Bündel (F0), das durch die Achse des Rohres geht, und
      ii) die Bündel (F1, F2, F3), die nach wenigstens einer Reflexion an der Grenzfläche zwischen der inneren Wand des Rohrs und der Luft aus dem Rohr treten sowie die Bündel (F4) umfassen, die tangential zur äußeren Wand des Rohrs (2) sind, wobei diese Bündel paarweise auftreten, eines der beiden Bündel eines jedes Paares auf der einen Seite einer Bezugsebene liegt, die die Rohrachse enthält und die parallel zum einfallenden Bündel ist, und das andere der beiden Bündel auf der anderen Seite dieser Bezugsebene liegt, und
   - Einrichtungen (16, 18) umfaßt, die vorgesehen sind, um für zwei dieser Paare den Abstand zwischen den beiden Bündeln jedes dieser Paare zu bestimmen und um mittels dieser Abstände den inneren Durchmesser und den äußeren Durchmesser des Rohres oder die jeweils diesen Durchmessern auf Höhe der Schnittebene entsprechenden Radien zu bestimmen.

**8.** Vorrichtung nach Anspruch 7, dadurch gekennzeichnet, daß sie ferner Einrichtungen (22) zur relativen Verschiebung des Rohres bezüglich der Einrichtungen (4, 8), die vorgesehen sind, dieses zu überstreichen, und bezüglich der Einrichtungen (14) zur Lichtdetektion umfaßt.

**9.** Vorrichtung nach einem der Ansprüche 7 und 8, dadurch gekennzeichnet, daß es ferner Einrichtungen (24, 26) zur Drehung des Rohrs um seine Achse umfaßt.

**10.** Vorrichtung nach einem der Ansprüche 7 bis 9, dadurch gekennzeichnet, daß die zum Überstreichen des Rohres vorgesehenen Einrichtungen (4, 8)
   - eine erste konvergente Optik (4), deren einer Brennpunkt auf der Achse des Rohres (2) liegt und deren optische Achse senkrecht zur Rohrachse ist, und
   - einen oszillierenden Spiegel (8) aufweisen, der im anderen Brennpunkt der ersten Optik angeordnet ist und der das Licht der Emissionseinrichtungen empfängt, wobei eine zweite konvergente Optik (6), von gleicher Brennweite wie die erste, zu dieser bezüglich der Rohrachse symmetrisch und derart angeordnet ist, daß ihre optische Achse mit der optischen Achse der ersten Optik zusammenfällt, so daß der eine der Brennpunkte der zweiten Optik an derselben Stelle wie der Brennpunkt der ersten Optik auf der Rohrachse liegt,

und dadurch, daß die Einrichtungen zur Lichtdetektion einen in etwa punktförmigen Photodetektor (14) umfassen, der sich im anderen Brennpunkt der zweiten Optik befindet.

## Claims

1. Method for the geometrical characterization of a tube (2), which is transparent to at least one light and whose inner and outer walls are substantially cylindrical and coaxial, according to which the tube (2), placed in air, is scanned by an incident beam of said light and which is displaced parallel to itself in a sectional plane perpendicular to the tube axis, characterized in that detection exclusively takes place of the non-deflected beams and which include:
   i) the beam (FO), which passes through the axis of the tube, and
   ii) the beams (F1, F2, F3) passing out of the tube after at least one reflection on the interface between the inner wall of the tube and the air, as well as the beams (F4) tangential to the outer wall of the tube (2), said beams being in pairs, one of the two beams of each pair being located on one side of a reference plane, which contains the tube axis and which is parallel to the incident beam and the other of said two beams being located on the other side of said reference plane and determination takes place for two of these pairs of the distance between the two beams of each of these two pairs and determination takes place, by means of the said distances, of the internal and external diameters of the tube or the radii corresponding respectively to said diameters and level with said sectional plane.

2. Method according to claim 1, characterized in that determination takes place of the internal and external diameter or the radii corresponding respectively to said diameters, in a plurality of sectional planes spaced from one another along the tube axis.

3. Method according to claim 1, characterized in that the tube (2) is rotated about its axis and determination takes place of the external diameter of the tube or the radius corresponding to said diameter, in the sectional plane and at a plurality of points of the outer wall of the tube located in said sectional plane.

4. Method according to claim 1, characterized in that the tube (2) is rotated about its axis, the variation liable to exist between the internal and external diameters of the tube (2) in the sectional plane is determined at a plurality of points of the tube located in said sectional plane, the tube being oriented in such a way that the diametral plane of the tube containing the point corresponding to the minimum variation is perpendicular to a reference plane parallel to the incident beam, for each of the two points of said diametral plane which are diametrically opposite on the inner wall of the tube determination takes place of the distance, with respect to the reference plane, of one of the non-deflected beams, which reflect at least once on the interface between the inner wall and air and determination takes place by means of the thus obtained two distances of the displacement (e) liable to exist between the axis of the inner wall and the axis of the outer wall.

5. Method according to any one of the claims 1 to 4, characterized in that the non-deflected beams are constituted by those (F4) which are tangential to the outer wall of the tube and those among the other non-deflected beams (F1, F2, F3), which are reflected at least once on the interface between the inner wall and air.

6. Method according to any one of the claims 1 to 5, characterized in that the tube (2) being a glass tube intended for the manufacture of a preform for optical fibres and whose inner wall is to be covered with a vitreous coating for the formation of the core of the optical fibres, the tube is geometrically characterized before and after the formation of the vitreous coating on the inner wall.

7. Apparatus for the geometrical characterization of a tube (2), which is transparent to at least one light and whose inner and outer walls are substantially cylindrical and coaxial, said apparatus comprising means (10) for the emission of said light and means (4, 8) for scanning the tube, placed in the air, by an incident light beam from said emission means, by displacing said beam parallel to itself in a sectional plane perpendicular to the tube axis, characterized in that the apparatus also comprises photodetection means (14) for exclusively detecting the non-deflected beams and which comprise:
   i) the beam (FO) which passes through the tube axis and
   ii) the beams (F1, F2, F3) passing out of the tube following at least one reflection on the interface between the inner wall of the tube and the air, as well as beams (F4) tangential to the outer wall of the tube (2), said beams being in pairs, one of the two beams of each pair being located on one side of a reference plane, which contains the tube axis and which is parallel to the incident beam, and the other of said two beams being located on the other side of said reference plane and means (16, 18) for determining for two of these pairs the distance between the two beams of each of the pairs and for determining, by means of said distances, the internal and external diameter of the tube, or the radii corresponding respectively to said diameters level with the sectional plane.

8. Apparatus according to claim 7, characterized in that it also comprises means (22) for the relative displacement of the tube with respect to the means (4, 8) for scanning the latter and the photodetection means (14).

9. Apparatus according to either of the claims 7 and 8, characterized in that it also comprises means (24, 26) for rotating the tube about its axis.

10. Apparatus according to any one of the claims 7 to 9, characterized in that the means (4, 8) for scanning the tube comprise a first convergent optics (4), whose one focus is located on the axis of the tube (2) and whose optical axis is perpendicular to said tube axis, an oscillating mirror (8) placed in the other focus of the first optics and which receives the light from the emission means, a second convergent optics (6) of the same focal distance as the first and being positioned symmetrically thereto with respect to the tube axis and in such a way that its optical axis coincides with the optical axis of the first optics, so that one of the foci of the second optics is on the tube axis, at the same point as the said focus of the first optics and in that the photodetection means incorporate a substantially punctiform photodetector (14), which is placed in the other focus of the second optics.

FIG. 1

*10*

*12*

*4*

*6*

*14*

E

*20*

*8*

*2*

F    F    F    F

m

*19*    *18*    *16*

FIG. 4

F4

i 31

i 32

F3

y4    y3

R

r    q

a3

X

FIG. 2A

FIG. 2B

FIG. 3A

FIG. 3B

FIG. 3C

FIG. 5

FIG. 6

FIG. 7

FIG. 8

FIG. 9

FIG. 10